# EUROPÄISCHE PATENTSCHRIFT

(11) **EP 1 528 388 B1**
(45) Veröffentlichungstag und Bekanntmachung des Hinweises auf die Patenterteilung: **18.08.2010**
(21) Anmeldenummer: 04022818.1
(22) Anmeldetag: 24.09.2004
(51) Int. Cl.: G01N 17/00

(54) **UV-Lichtemissionsdioden als Strahlungsquelle einer Vorrichtung zur künstlichen Bewitterung von Proben**
UV light emission diodes as radiation source of a device for the artificial weathering of samples
Diodes d'émission de lumière UV comme source de rayonnement d'un dispositif pour le vieillisement artificiel des échantillons

(30) Priorität: 27.10.2003 DE 10350020
(43) Veröffentlichungstag der Anmeldung: 04.05.2005
(73) Patentinhaber: Atlas Material Testing Technology GmbH, 63589 Linsengericht/Altenhasslau (DE)
(72) Erfinder: March, Peter, 60326 Frankfurt am Main (DE); Rudolph, Bernd, 63755 Alzenau (DE)
(74) Vertreter: Graf Lambsdorff, Matthias

(56) Entgegenhaltungen:
- EP-A- 1 248 097
- DE-A- 2 502 239
- US-A1- 2002 187 070

## Beschreibung

Die vorliegende Erfindung betrifft eine Vorrichtung zur künstlichen Bewitterung von Proben nach dem Oberbegriff des Patentanspruchs 1. In derartigen Vorrichtungen wird eine Bewertung des witterungsbedingten Alterungsverhaltens einer Probe, insbesondere einer flächigen Werkstoffprobe, durchgeführt, wobei die Probe einer künstlichen Bewitterung ausgesetzt wird. Derartige Vorrichtungen weisen zu diesem Zweck üblicherweise eine Bewitterungskammer auf, in welcher Halterungsmittel für die Halterung von zu bewitternden Proben und eine Strahlungsquelle zur Beaufschlagung der Proben mit Strahlung, insbesondere mit UV-Strahlung, angeordnet sind.

In derartigen Vorrichtungen zur künstlichen Bewitterung von Werkstoffproben soll zumeist die Lebensdauer von Werkstoffen abgeschätzt werden, die in ihrer Anwendung ständig den natürlichen Wetterverhältnissen ausgesetzt sind und sich somit unter klimatischen Einflüssen wie Sonnenlicht, Sonnenwärme, Feuchtigkeit und dergleichen verschlechtern. Um eine gute Simulation der natürlichen Witterungsgegebenheiten zu erhalten, ist es von Vorteil, wenn die spektrale Energieverteilung des in der Vorrichtung erzeugten Lichtes möglichst derjenigen der natürlichen Sonnenstrahlung entspricht, aus welchem Grund in solchen Geräten als Strahlungsquelle Xenon-Strahler eingesetzt werden. Zusätzlich wird eine zeitraffende Alterungsprüfung der Werkstoffe im Wesentlichen durch eine gegenüber den natürlichen Verhältnissen stark intensivierte Bestrahlung der Proben erzielt, wodurch die Alterung der Proben beschleunigt wird. Somit lässt sich nach verhältnismäßig kurzer Zeit eine Aussage über das Langzeit-Alterungsverhalten einer Werkstoffprobe machen.

Ein Großteil der in künstlichen Bewitterungsgeräten untersuchten Werkstoffproben bestehen aus polymeren Werkstoffen. Bei diesen wird die witterungsbedingte Verschlechterung im Wesentlichen durch den UV-Anteil der Sonnenstrahlung hervorgerufen. Die dabei ablaufenden fotochemischen Primärprozesse, also die Absorption von Photonen und die Erzeugung angeregter Zustände oder freier Radikale, sind temperaturunabhängig. Dagegen können die nachfolgenden Reaktionsschritte mit den Polymeren oder Additiven temperaturabhängig sein, so dass die beobachtete Alterung der Werkstoffe ebenfalls temperaturabhängig ist.

In den bisher bekannten Bewitterungsprüfgeräten wird als Strahlungsquelle zumeist eine Xenon-Lampe eingesetzt. Mit dieser kann zwar bekanntermaßen das Sonnenspektrum recht gut simuliert werden, die emittierte Strahlung weist jedoch einen relativ hohen Spektralanteil im infraroten Spektralbereich auf, der zur Vermeidung von zu großer Aufheizung der Proben durch Filter unterdrückt werden muss. Eine handelsübliche Xenon-Strahlungsquelle weist zudem nur eine Lebensdauer von ca. 1500 Stunden auf.

Des Weiteren kann als Strahlungsquelle auch eine Halogenlampe eingesetzt werden, die jedoch den Nachteil aufweist, dass sie nicht oder nur sehr schwer regelbar ist. Dasselbe gilt auch für Fluoreszenz-Lampen, die ebenfalls bereits als Strahlungsquellen in Bewitterungsprüfgeräten eingesetzt wurden und denen nachteilhaft eine relativ kurze Lebensdauer zukommt.

Alle genannten Strahlungsquellen weisen darüber hinaus den Nachteil auf, dass sie spektral nicht veränderbar sind. Es besteht aber oftmals das Bedürfnis, das Alterungsverhalten einer Werkstoffprobe in Abhängigkeit von einer Strahlung aus einem begrenzten Wellenlängenbereich zu untersuchen. Hierzu ist es zwar bekannt, die Strahlung einer Xenon-Lampe durch ein Prisma oder Gitter in ihre spektralen Anteile zu zerlegen und auf die Probe zu richten, wodurch die verschiedenen Teile der Probe mit Strahlung unterschiedlicher Wellenlänge bestrahlt werden und die Eigenschaftsänderungen an verschiedenen Stellen der Probe eindeutig der Wellenlänge der aufgetroffenen Strahlung zugeordnet werden können. Hierfür sind jedoch relativ lange Bestrahlungsdauern erforderlich, da die spektrale Bestrahlungsstärke auf der Probe selbst relativ gering ist.

Ein weiterer Nachteil der oben genannten konventionellen Strahlungsquellen von Bewitterungsprüfgeräten besteht darin, dass diese ihrer Konstruktion und ihrer Ansteuerung entsprechend räumlich relativ unhandlich sind und somit beispielsweise veränderten Bedingungen hinsichtlich der Probenoberflächen der zu bestrahlenden Werkstoffproben nicht angepasst werden können.

Die Druckschrift EP-A-1 248 097 beschreibt eine Bewitterungsvorrichtung, welche eine Anordnung von Entladungslampen zur Erzeugung von UV-Strahlung zur Bestrahlung von zu untersuchenden Proben enthält. Die Lampen können durch Xenon-Entladungslampen gebildet sein.

Die Druckschrift US-A-2002/187070 beschreibt ein Bewitterungsverfahren für die Untersuchung von organischen Materialien, bei welchem die zu untersuchenden Proben der UV-Strahlung einer UV-Fluoreszenzlampe ausgesetzt werden.

Die Druckschrift DE-A-25 02 239 beschreibt ein Licht- und Wetterechtheitsprüfgerät mit einem Probenraum und einem im Probenraum angeordneten Gasentladungsstrahler für die Erzeugung von UV-Strahlung.

Es ist demgemäß Aufgabe der vorliegenden Erfindung, eine Vorrichtung zur künstlichen Bewitterung von Proben anzugeben, in der die Strahlungsquelle und die von ihr emittierte Strahlung in ihren spektralen und räumlichen Gegebenheiten flexibler verändert werden können und insbesondere veränderten Verhältnissen der zu bestrahlenden Proben besser angepasst werden können.

Diese Aufgabe wird durch die Merkmale des Patentanspruchs 1 gelöst. Vorteilhafte Ausgestaltungen und Weiterbildungen der Erfindung sind in den Unteransprüchen angegeben.

Die Erfindung bezieht sich demzufolge auf eine Vorrichtung zur künstlichen Bewitterung von Proben, welche eine Bewitterungskammer aufweist, in der Halterungsmittel für die Halterung von zu bewitternden Proben und eine UV-Strahlungsanordnung zur Beaufschlagung der Proben mit UV-Strahlung angeordnet sind. Die Erfindung besteht im Wesentlichen darin, dass die UV-Strahlungsanordnung eine Anordnung von UV-Lichtemissionsdioden (LED) umfasst, welche auf einer flexiblen Leiterplatte montiert ist, sodass die Anordnung der UV-LEDs dem Oberflächenverlauf einer zu bewitternden Probe mit konstantem Abstand zwischen den LEDs und der Oberfläche der Probe anpassbar ist. Die Erfindung macht somit die innerhalb der letzten Jahre erfolgte Bereitstellung von UV-Lichtemissionsdioden, insbesondere solcher auf GaN-Basis, für Bewitterungsprüfgeräte nutzbar. Mit GaN-LEDs kann mittlerweile der gesamte UV-Bereich des Sonnenspektrums in zufriedenstellender Weise abgedeckt werden. Die erreichbaren Strahlungsdichten sind bereits so hoch, dass durch mehrfache Anordnung von UV-LEDs die Strahlungsleistung einer konventionellen Xenon-Lampe problemlos erreicht werden kann.

Das gewünschte UV-Spektrum hängt nur vom Bandabstand der verwendeten Halbleiter-Materialien der LEDs ab. Zusätzliche unerwünschte Spektralanteile wie etwa infrarote Spektralanteile werden somit gar nicht erst erzeugt.

Ein weiterer Vorteil besteht darin, dass die Lichtintensität der erzeugten UV-Strahlung sehr einfach über den den LEDs zugeführten Strom geregelt werden kann. Über die Stromregelung kann auch das Emissionsspektrum in begrenztem Umfang verändert werden.

Aufgrund der kleinen Bauform der LEDs können diese in Form von LED-Arrays angeordnet werden. Indem diese auf flexiblen Leiterplatten montiert werden, ist es möglich, auch geometrisch nicht plane Proben annähernd gleichmäßig zu bestrahlen bzw. eine Anzahl von Proben innerhalb der Bewitterungskammer gleichmäßig zu bestrahlen. Es können auch nahezu beliebige Bestrahlungsflächen erreicht werden, da LED-Arrays relativ einfach skalierbar sind.

Darüber hinaus weisen LEDs bekanntermaßen hohe Lebensdauern in der Größenordnung von 1500 Stunden oder mehr auf.

Die spektrale Veränderbarkeit einer derartigen UV-Strahlungsanordnung kann dadurch erreicht werden, dass mehrere verschiedene Sorten von Lichtemissionsdioden mit verschiedenen spektralen Emissionscharakteristika vorgesehen sein könnten, um insbesondere somit den ultravioletten Spektralanteil natürlicher Sonnenstrahlung zu simulieren. Es kann somit dafür Sorge getragen werden, dass der UV-A-Anteil und der UV-B-Anteil des Sonnenspektrums gleichermaßen realistisch berücksichtigt werden. Da die verschiedenen Sorten von Lichtemissionsdioden auch einzeln ansteuerbar sein können, kann auch der Einfluss der Bestrahlung einzelner Wellenlängenbereiche auf die Werkstoffproben untersucht werden.

Es kann weiterhin vorgesehen sein, dass zusätzlich mindestens eine weitere Sorte von Lichtemissionsdioden angeordnet wird, deren spektrale Emission im sichtbaren Spektralbereich liegt, so dass insbesondere somit ein Teil des sichtbaren Spektralanteils natürlicher Sonnenstrahlung simuliert werden kann. Falls gewünscht, kann solchermaßen durch Anordnung verschiedener Sorten von LEDs mit verschiedenen Emissionscharakteristika im Wesentlichen das gesamte Spektrum natürlicher Sonnenstrahlung abgedeckt werden.

Die LED-Anordnung ist bevorzugtermaßen als regelmäßige Anordnung der LEDs vorgesehen, also insbesondere nach Art einer Matrix in Zeilen und Spalten.

Es kann vorgesehen sein, dass eine Werkstoffprobe bestrahlt werden soll, die eine unebene Oberflächentopologie aufweist. Für diesen Fall kann die LED-Anordnung so ausgebildet und angeordnet sein, dass die LEDs der Probenoberfläche der Werkstoffprobe mit gleichem Abstand gegenüberstehen, so dass eine gleichmäßige Bestrahlung der Werkstoffprobe erreicht wird. Wenn mehrere Werkstoffproben bestrahlt werden, so kann gleichermaßen erreicht werden, dass die LEDs von den Probenoberflächen der mehreren Werkstoffproben gleiche Abstände einnehmen. Die LED-Anordnung kann demgemäß dem Verlauf oder der Topologie der einen Probenoberfläche oder der mehreren Probenoberflächen angepasst werden.

Die Anpassbarkeit der LED-Anordnung kann dadurch erreicht werden, dass die LEDs auf einer flexiblen Leiterplatte, insbesondere einem sogenannten Flexboard, montiert werden. Die Montage kann durch Oberflächenmontagetechnik (SMT, Surface Mount Technology) in an sich bekannter Weise durchgeführt werden, wobei eine Mehrzahl von LEDs auf einer Leiterplatte (PCB, Printed Circuit Board) montiert werden. Dabei kann eine LED-Bauform verwendet werden, wie sie beispielsweise in dem Artikel "Siemens SMT-TOPLED für die Oberflächenmontage" von F. Möllmer und G. Wait1 in der Zeitschrift Siemens Components 29 (1991), Heft 4, S. 147 im Zusammenhang mit Bild 1 beschrieben ist. Diese Form der LED ist äußerst kompakt und erlaubt die Anordnung einer Vielzahl von derartigen LEDs in einer Reihen- oder Matrixanordnung.

Wenn die LEDs auf einer flexiblen Leiterplatte montiert werden, so kann letztere dadurch gehaltert werden, indem sie auf einen Haltekörper aufgebracht wird und damit dessen Oberflächenform und -topologie annimmt. Dieser Haltekörper kann aus einem dickeren metallischen Blech bestehen und somit gleichzeitig als Kühlkörper dienen. Das Blech oder auch eine andere Unterlage kann formstabil verbiegbar sein, so dass die Anpassbarkeit an veränderte Probenformen gegeben ist. Der Haltekörper muss dann an einer Innenwand der Bewitterungskammer befestigt werden.

Alternativ dazu kann eine flexible Leiterplatte auch selbst durch ihre Dicke oder ihr Material derart beschaffen sein, dass sie verbiegbar ist und den jeweils neuen Zustand formstabil beibehält.

In einem konventionellen Bewitterungsprüfgerät werden die Probenhalterungsmittel durch einen ringförmig geschlossenen Halterungsrahmen gebildet, welcher konzentrisch um die Strahlungsanordnung verläuft und insbesondere in eine Drehbewegung um die Strahlungsanordnung versetzbar ist. Wenn die vorliegende Erfindung in einem konventionellen Bewitterungsprüfgerät zum Einsatz kommen soll, so kann die LED-Anordnung innerhalb des ringförmigen Halterungsrahmens ebenfalls als eine ringförmig geschlossene Anordnung vorgesehen sein. Insbesondere kann innerhalb des Halterungsrahmens und konzentrisch mit diesem ein rohrförmiger Haltekörper vorgesehen sein, wobei die LEDs auf dem äußeren Umfang des rohrförmigen Haltekörpers in einer gewünschten Verteilung befestigt und geeignet elektrisch kontaktiert sind. Die LEDs sind auf einer flexiblen Leiterplatte montiert, die ihrerseits um den äußeren Umfang des rohrförmigen Haltekörpers gelegt und an diesen befestigt ist. Der rohrförmige Haltekörper kann aus einem Metall gebildet sein und somit als Kühlkörper für die Wärmeabfuhr der LEDs ausgebildet sein.

Im Folgenden wird die Erfindung anhand von Ausführungsbeispielen in Verbindung mit den Zeichnungsfiguren noch näher erläutert. Es zeigen:
- Fig. 1: ein Ausführungsbeispiel einer erfindungsgemäßen Vorrichtung zur künstlichen Bewitterung von Proben in einem Längsschnitt;
- Fig. 2: einen Querschnitt des in der Fig. 1 gezeigten rohrförmigen Haltekörpers mit einer daran befestigten, die Lichtemissionsdioden tragenden, flexiblen Leiterplatte;
- Fig. 3: eine auf einer verbiegbaren Unterlage befestigte, die Lichtemissionsdioden tragende, flexible Leiterplatte; und
- Fig. 4: ein Ausführungsbeispiel für die Verwendung dreier verschiedener UV-LEDs und ihre spektralen Emissionscharakteristika (durchgezogen) und die addierte spektrale Emissionskurve (gestrichelt).

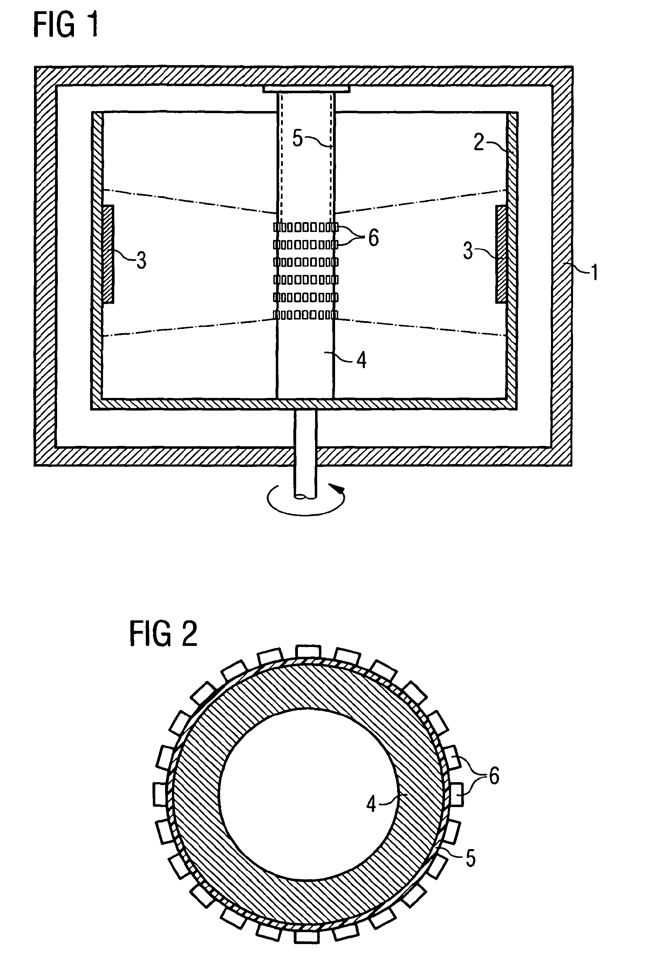

In der Fig. 1 ist eine erfindungsgemäße Vorrichtung zur künstlichen Bewitterung von Proben in einem Längsschnitt dargestellt.

In einer Bewitterungskammer 1 ist ein ringförmig geschlossener Halterungsrahmen 2 drehbar gelagert, an dessen Innenwand Proben 3 oder Werkstücke gehaltert werden können. Der Halterungsrahmen 2 ist insbesondere im Querschnitt kreisförmig. Innerhalb des Halterungsrahmens 2 und konzentrisch mit diesen ist ein rohrförmiger Haltekörper 4 derart positioniert, indem er an der oberen Wand der Bewitterungskammer 1 fixiert ist. Um den äußeren Umfang des rohrförmigen Haltekörpers 4 ist eine flexible Leiterplatte 5 gelegt und in geeigneter Weise an diesem befestigt. Auf der flexiblen Leiterplatte 5 sind UV-Lichtemissionsdioden 6 in einer regelmäßigen Anordnung in Oberflächenmontagetechnik montiert. Diese können verschiedene Sorten von Lichtemissionsdioden mit verschiedenen spektralen Emissionscharakteristika umfassen. Es kann überdies vorgesehen sein, dass sie einzeln elektrisch ansteuerbar sind und dass jede einzelne Lichtemissionsdiode zeitlich veränderbar ansteuerbar ist. Es kann auch vorgesehen sein, dass Lichtemissionsdioden einer spektralen Sorte gemeinsam elektrisch ansteuerbar sind und Lichtemissionsdioden einer anderen spektralen Sorte ebenfalls gemeinsam elektrisch ansteuerbar sind. Es kann das gesamte Feld von Lichtemissionsdioden in eine Anzahl von Teilfeldern aufgeteilt sein, wobei in jedem Teilfeld mindestens eine Lichtemissionsdiode von jeder verwendeten spektralen Sorte enthalten ist.

Der Halterungsrahmen 2 ist vorzugsweise derart drehbar gelagert, dass die Drehachse mit der Achse des rohrförmigen Haltekörpers 4 zusammenfällt, so dass die Proben 3 sich im Wesentlichen auf einer Kreisbahn mit gleichbleibendem Abstand von den einzelnen Lichtemissionsdioden 6 um diese herum bewegen.

Die Bewitterungskammer 1 kann in an sich bekannter Weise weitere Einrichtungen zur künstlichen Bewitterung wie beispielsweise Feuchtigkeitserzeuger oder dergleichen aufweisen, die für die vorliegende Erfindung keine wesentliche Rolle spielen und auf die daher nicht weiter eingegangen werden soll. Es kann beispielsweise auch ein Luftstrom in die Bewitterungskammer 1 eingeleitet werden, der in vertikaler Richtung an den Proben 3 vorbeistreicht.

In der Fig. 2 ist der rohrförmige Haltekörper 4 der Fig. 1 im Querschnitt dargestellt. Um den äußeren Umfang des rohrförmigen Haltekörpers 4 ist die flexible Leiterplatte 5 formschlüssig aufgebracht. Auf diese sind die UV- Lichtemissionsdioden 6 in der an sich bekannten SMT-Montagetechnik aufgebracht. Dies ist an sich im Stand der Technik bekannt und deshalb nicht im Detail dargestellt. Der rohrförmige Haltekörper 4 kann aus einem Metall oder aus einem anderen Material mit guter Wärmeleitfähigkeit gebildet sein, so dass die in den Lichtemissionsdioden 6 entstehende wärme effizient abgeführt werden kann. Gewünschtenfalls kann der in der Bewitterungskammer 1 erzeugte Luftstrom zusätzlich durch das Innere des rohrförmigen Haltekörpers 4 geleitet werden, um die Wärme von diesem abzuleiten.

Die LEDs 6 sind, wie dargestellt, in einer Matrix angeordnet. Stattdessen können die Zeilen auch alternierend mit einem Versatz zwischen übereinander liegenden LEDs angeordnet werden, wobei eine LED jeweils auf der Höhe des Zwischenraums der beiden in der darüber liegenden Zeile angeordneten LEDs zu liegen kommt.

Die dynamische elektrische Ansteuerbarkeit der einzelnen Lichtemissionsdioden kann beispielsweise zu einem energiesparenden Betrieb der UV-Strahlungsanordnung ausgenutzt werden. Wenn nämlich beispielsweise nur eine relativ geringe Anzahl von Werkstoffproben künstlich bewittert werden sollen, so können diese nebeneinander auf einem bestimmten begrenzten Winkelsektor des Halterungsrahmens 2 an diesem befestigt werden. Wenn der Halterungsrahmen 2 in eine Drehbewegung versetzt wird, so werden stets nur diejenigen Lichtemissionsdioden mit Strom beaufschlagt, die sich in dem betreffenden Winkelsektor befinden, so dass die Werkstoffproben durch einen mit der gleichen Winkelgeschwindigkeit wie die Winkelgeschwindigkeit des Halterungsrahmens 2 umlaufenden Lichtkegel aus UV-Strahlung beaufschlagt werden. Es muss lediglich für eine geeignete elektrische Ansteuerung und Programmierung der Lichtemissionsdioden 6 gesorgt werden.

Wie bereits erwähnt, kann das gesamte Diodenfeld der Lichtemissionsdioden 6 in Teilfelder unterteilt sein, in denen jeweils mindestens eine Lichtemissionsdiode einer bestimmten spektralen Sorte enthalten ist. Es kann vorgesehen sein, dass in jedem dieser Teilfelder derart spektral verschiedene Lichtemissionsdioden angeordnet werden, dass annähernd eine dem Sonnenspektrum vergleichbare Strahlung emittiert werden kann.

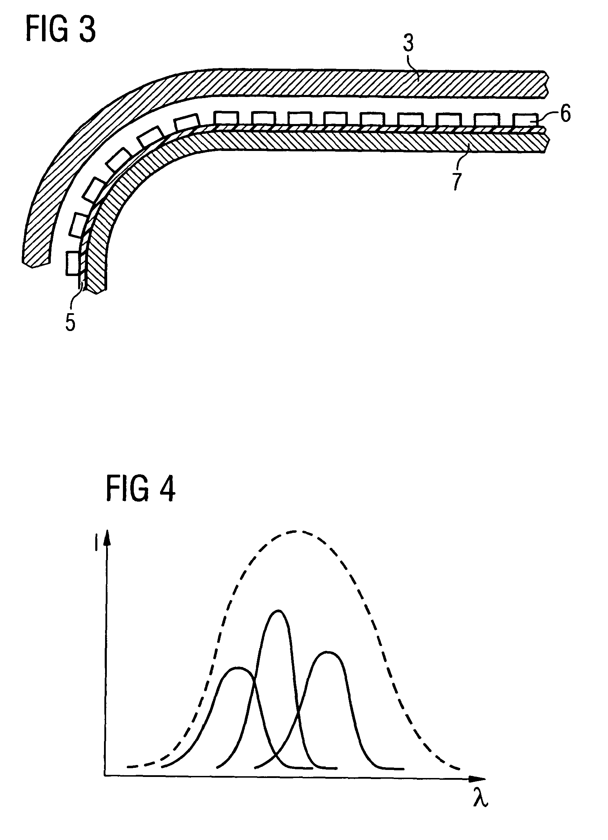

Falls jedoch nur der UV-Anteil des Sonnenspektrums annähernd simuliert werden soll, so können beispielsweise drei verschiedene Lichtemissionsdioden mit drei verschiedenen Emissionskurven im UV-Spektrum verwendet werden. Dies ist in der Fig. 4 dargestellt, wobei zwischen den Wellenlängen 300 nm und 400 nm beispielshalber die Emissionskurven von drei spektral verschiedenen Lichtemissionsdioden aufgetragen sind, die sich zu einer gesamten Emissionskurve addieren. Da die drei Lichtemissionsdioden unabhängig voneinander ansteuerbar sind, kann somit das emittierte UV-Spektrum flexibel eingestellt werden.

In Verbindung mit der Fig. 1 wurde beschrieben, wie ein konventionelles Bewitterungsprüfgerät erfindungsgemäß aufgebaut werden kann. Die vorliegende Erfindung geht jedoch noch in einem entscheidenden Punkt darüber hinaus, indem sie eine räumliche Anpassung der UV-Strahlungsanordnung an eine oder mehrere zu bestrahlende Werkstoffproben ermöglicht. In der Fig. 3 ist dies beispielhaft anhand einer Werkstoffprobe 3 gezeigt, die eine vorgegebene Oberflächentopologie aufweist. Durch die Erfindung ist es nun möglich, diese Werkstoffprobe 3 derart zu bestrahlen, dass der Abstand zwischen den Lichtemissionsdioden 6 und der Probenoberfläche räumlich konstant ist. Um dies zu erreichen, werden die Lichtemissionsdioden 6 auf einer flexiblen Leiterplatte 5 auf die bereits vorstehend beschriebene Art und Weise befestigt. Da die flexible Leiterplatte 5 in der Regel selbst nicht formstabil ist, wird sie auf ein Substrat 7 aufgebracht, welches formveränderbar ist und bei Veränderung die Form beibehält, also formstabil ist. Das Substrat 7 kann beispielsweise ein leicht verbiegbares Blech sein, welches wiederum gleichzeitig als Kühlkörper für die von den Lichtemissionsdioden 6 abzuführende Wärme dient. Das Substrat 7 muss dann nur noch in geeigneter Weise an einer Innenwand der Bewitterungskammer befestigt werden. Es ist ebenso denkbar, dass eine flexible Leiterplatte verwendet wird, die durch ihren Aufbau bedingt selbst in formstabiler Weise verändert werden kann, so dass kein zusätzliches Substrat 7 verwendet werden muss.

Falls die Werkstoffprobe 3 der Fig. 3 in eine Drehbewegung versetzt wird, so kann vorgesehen sein, dass die LED-Anordnung ebenfalls in eine mitläufige Drehbewegung gleicher Winkelgeschwindigkeit versetzt wird, so dass die Werkstoffprobe 3 und die LED-Anordnung stets in einem konstanten räumlichen Bezug zueinander stehen.

## Patentansprüche

1. Vorrichtung zur künstlichen Bewitterung von Proben, mit einer Bewitterungskammer (1), in welcher Halterungsmittel (2) für die Halterung von zu bewitternden Proben (3) und eine UV-Strahlungsanordnung zur Beaufschlagung der Proben mit UV-Strahlung angeordnet sind,
**dadurch gekennzeichnet, dass**
- die UV-Strahlungsanordnung eine Anordnung von UV-Lichtemissionsdioden (LED) (6) umfasst,
- die Anordnung von UV-LEDs (6) auf einer flexiblen Leiterplatte (5) montiert ist, sodass
- die Anordnung von UV-LEDs (6) derart dem Verlauf einer Probenoberfläche einer zu bewitternden Probe (3) oder den Probenoberflächen von mehreren zu bewitternden Proben anpassbar ist, dass die LEDs (6) der Probenoberfläche der einen Probe (3) oder den Probenoberflächen der mehreren Proben mit gleichem Abstand gegenüberstehen.

2. Vorrichtung nach Anspruch 1,
**dadurch gekennzeichnet, dass**
- mehrere verschiedene Sorten von Lichtemissionsdioden (6) mit verschiedenen spektralen Emissionscharakteristika vorgesehen sind, um somit den ultravioletten Spektralanteil natürlicher Sonnenstrahlung zu simulieren.

3. Vorrichtung nach Anspruch 1 oder 2,
**dadurch gekennzeichnet, dass**
- zusätzlich mindestens eine weitere Sorte von Lichtemissionsdioden vorgesehen ist, deren spektrale Emission im sichtbaren Spektralbereich liegt, um somit einen Teil des sichtbaren Spektralanteils natürlicher Sonnenstrahlung zu simulieren.

4. Vorrichtung nach Anspruch 3,
**dadurch gekennzeichnet, dass**
- mit den verschiedenen Sorten von LEDs (6) im Wesentlichen das gesamte Spektrum natürlicher Sonnenstrahlung abgedeckt wird.

5. Vorrichtung nach einem der vorhergehenden Ansprüche,
**dadurch gekennzeichnet, dass**
- die LED-Anordnung als regelmäßig Anordnung der LEDs (6) vorgesehen ist.

6. Vorrichtung nach einem der Ansprüche 1 - 5,
**dadurch gekennzeichnet, dass**
- die flexible Leiterplatte (5) auf einem Haltekörper (4; 7) befestigt ist, welcher als Kühlkörper ausgebildet ist.

7. Vorrichtung nach einem der vorhergehenden Ansprüche,
**dadurch gekennzeichnet, dass**
- die Halterungsmittel (2) durch einen ringförmig geschlossenen Halterungsrahmen (2) gebildet sind, welcher konzentrisch um die Strahlungsanordnung verlängert und in eine Drehbewegung um die Strahlungsanordnung versetzbar ist.

8. Vorrichtung nach Anspruch 7,
**dadurch gekennzeichnet, dass**
- innerhalb des Halterungsrahmens (2) die LED-Anordnung als ringförmig geschlossene Anordnung vorgesehen ist.

9. Vorrichtung nach Anspruch 8,
**dadurch gekennzeichnet, dass**
- die flexible Leiterplatte (5), auf der die LEDs (6) befestigt sind, an einem rohrförmigen Haltekörper (4) befestigt ist, welcher als Kühlkörper ausgebildet ist.

10. Vorrichtung nach einem der vorhergehenden Ansprüche,
**dadurch gekennzeichnet, dass**
- die LEDs (6) einzeln zeitlich abhängig ansteuerbar sind.

11. Vorrichtung nach einem der vorhergehenden Ansprüche,
**dadurch gekennzeichnet, dass**
- die UV-LEDs (6) auf GaN-Basis hergestellt sind.

## Claims

1. Device for the artificial weathering of samples, comprising:
a weathering chamber (1), in which holding means (2) for holding samples (3) to be weathered and a UV radiation arrangement for applying UV radiation to the samples are arranged,
**characterized in that**
- the UV radiation arrangement comprises an arrangement of UV light-emitting diodes (LED) (6),
- the arrangement of UV-LEDs (6) is mounted on a flexible circuit board (5), so that
- the arrangement of UV-LEDs (6) is adaptable to the contour of a sample surface of a sample (3) to be weathered or sample surfaces of several samples to be weathered in such a way that the LEDs (6) face the one sample surface or the sample surfaces of the several samples with an equal distance.

2. Device according to claim 1,
**characterized in that**
- a plurality of different types of light-emitting diodes (6) with different spectral emission characteristics are provided, so as to simulate the ultra-violet spectral component of natural solar radiation.

3. Device according to claim 1 or 2,
**characterized in that**
- at least one other type of light-emitting diode is also provided, the spectral emission of which lies in the visible spectral range, in particular so as to simulate part of the visible spectral component of natural solar radiation.

4. Device according to claim 3,
**characterized in that**
- with the various types of LEDs (6) essentially the entire spectrum of natural solar radiation is covered.

5. Device according to one of the preceding claims,
**characterized in that**
- the LED arrangement is provided as a regular arrangement of the LEDs (6).

6. Device according to one of claims 1 to 5,
**characterized in that**
- the flexible circuit board (5) is fastened on a holding body (4; 7), which is designed as a heat sink.

7. Device according to one of the preceding claims,
**characterized in that**
- the holding means (2) are formed by a holding frame (2) closed in a ring shape, which extends concentrically around the radiation source and to which a rotational movement around the radiation source can be imparted.

8. Device according to claim 7,
**characterized in that**
- the LED arrangement is provided as an arrangement closed in a ring shape inside the holding frame (2).

9. Device according to claim 8,
**characterized in that**
- the flexible circuit board (5) on which the LEDs (6) are fastened, is fastened to a tubular holding body (4) which is designed as a heat sink.

10. Device according to one of the preceding claims,
**characterized in that**
- the LEDs (6) can be operated individually as a function of time.

11. Device according to one of the preceding claims,
**characterized in that**
- the UV-LEDs (6) are made on the basis of GaN.

## Revendications

1. Dispositif pour l'exposition artificielle aux intempéries / le vieillissement artificiel des échantillons, comprenant une chambre d'exposition aux intempéries / de vieillissement (1) dans laquelle des moyens de fixation (2) sont agencés pour la fixation des échantillons (3) qui doivent être exposés aux intempéries / vieillis et dans laquelle un système de rayonnement ultraviolet (UV) est mis en place pour solliciter les échantillons avec un rayonnement ultraviolet,
**caractérisé en ce que :**
- le système de rayonnement ultraviolet (UV) comporte un système de diodes d'émission de lumière ultraviolette (LED) (6),
- le système de LED à UV (6) est monté sur une carte flexible de circuits imprimés (5), de telle sorte que
- le système de LED à UV (6) peut être adapté à l'extension d'une surface d'échantillon d'un échantillon (3) devant être exposé aux intempéries / vieilli ou aux surfaces d'échantillon de plusieurs échantillons devant être exposés aux intempéries / vieillis de telle sorte que les LED (6) de la surface d'échantillon de l'un des échantillons (3) ou des surfaces d'échantillon des plusieurs échantillons sont placées l'une à l'opposé de l'autre à la même distance.

2. Dispositif selon la revendication 1,
**caractérisé en ce que :**
- plusieurs diverses sortes de diodes d'émission de lumière (6) comportant des caractéristiques spectrales différentes d'émission sont prévues pour simuler ainsi la part spectrale ultraviolette du rayonnement solaire naturel.

3. Dispositif selon l'une ou l'autre des revendications 1 et 2,
**caractérisé en ce que :**
- au moins une autre sorte de diodes d'émission de lumière est prévue en supplément dont l'émission spectrale se trouve dans la plage spectrale visible pour simuler ainsi une partie de la part spectrale visible du rayonnement solaire naturel.

4. Dispositif selon la revendication 3,
**caractérisé en ce que :**
- les diverses sortes de LED (6) permettent de couvrir sensiblement le spectre complet du rayonnement solaire naturel.

5. Dispositif selon l'une des revendications précédentes,
**caractérisé en ce que :**
- le système de LED est prévu comme système régulier de LED (6).

6. Dispositif selon l'une des revendications 1 à 5,
**caractérisé en ce que :**
- la carte flexible de circuits imprimés (5) est fixée sur un corps de fixation (4 ; 7), lequel est réalisé comme corps de refroidissement.

7. Dispositif selon l'une des revendications précédentes,
**caractérisé en ce que :**
- les moyens de fixation (2) sont formés par un cadre de fixation fermé (2) de forme annulaire qui est prolongé concentriquement autour du système de rayonnement et qui peut être décalé autour du système de rayonnement pendant un mouvement de rotation.

8. Dispositif selon la revendication 7,
**caractérisé en ce que :**
- le système de LED est prévu comme système fermé en forme de bague à l'intérieur du cadre de fixation (2).

9. Dispositif selon la revendication 8,
**caractérisé en ce que :**
- la carte flexible de circuits imprimés (5), sur laquelle les LED (6) sont fixées, est fixée sur un corps de maintien (4) en forme de tubulure, lequel est réalisé comme corps de refroidissement.

10. Dispositif selon l'une des revendications précédentes,
**caractérisé en ce que :**
- les LED (6) peuvent être excitées individuellement et en fonction du temps.

11. Dispositif selon l'une des revendications précédentes,
**caractérisé en ce que :**
- les LED à UV (6) sont fabriquées à base de nitrure de gallium (GaN).
